Europäisches Patentamt

**European Patent Office**

**Office européen des brevets**

(11) Veröffentlichungsnummer: **0 093 082**
**B1**

# (12) EUROPÄISCHE PATENTSCHRIFT

(45) Veröffentlichungstag der Patentschrift:
**29.05.85**

(51) Int. Cl.⁴: **G 03 G 15/00**, G 03 B 27/62

(21) Anmeldenummer: **83810158.2**

(22) Anmeldetag: **18.04.83**

(54) **Vorrichtung zum Positionieren einer Kopiervorlage bei einer Kopiereinrichtung.**

(30) Priorität: **23.04.82 CH 2501/82**

(43) Veröffentlichungstag der Anmeldung:
**02.11.83 Patentblatt 83/44**

(45) Bekanntmachung des Hinweises auf die Patenterteilung:
**29.05.85 Patentblatt 85/22**

(84) Benannte Vertragsstaaten:
**CH DE FR GB IT LI**

(56) Entgegenhaltungen:
**US - A - 2 741 479**
**US - A - 3 561 865**

**RESEARCH DISCLOSURE, Nr. 186, Oktober 1979, Nr. 18628, "Improved film projection gate"**

(73) Patentinhaber: **GRETAG Aktiengesellschaft, Althardstrasse 70, CH-8105 Regensdorf (CH)**

(72) Erfinder: **Binder, Erich Gustav, Kastellstrasse 3, CH-8107 Buchs (CH)**

(74) Vertreter: **Pirner, Wilhelm et al, Patentabteilung der CIBA-GEIGY AG Postfach, CH-4002 Basel (CH)**

## Beschreibung

Die Erfindung betrifft eine Positioniervorrichtung gemäß dem Oberbegriff von Patentanspruch 1.

Bei automatischen Durchlaufkopiergeräten, sog. Printern, wird die Kopiervorlage üblicherweise durch eine Niederhalteplatte in der Kopierposition auf der Vorlagenbühne festgehalten, wobei die Platte meist mit Einführungsschrägen versehen ist, welche verhindern, daß sich aus der Transportbahn der Kopiervorlage abstehende Vorlagenteile an der Platte verfangen können. Solche Niederhalteplatten arbeiten zufriedenstellend, wenn es sich bei den Kopiervorlagen um längere, zusammenhängende Filmstreifen handelt. Bei unzusammenhängenden Kopiervorlagen, also wenn z. B. Einzelbilder oder kürzere Filmstreifen in gegenseitigem Abstand an einem Trägerband aufgereiht sind, wie dies normalerweise bei Nachbestellaufträgen der Fall ist, sind diese Niederhalteplatten jedoch insofern von Nachteil, als die Kopiervorlagen zumindest an ihrer vorlaufenden Kante, die in Kopierposition genau in den Bereich der Einführungsschräge zu liegen kommt, nicht festgehalten werden und damit die normalerweise vorhandenen Krümmungen und Verwerfungen der Kopiervorlage nicht eliminiert werden können, welche zu mangelhaften Kopien führen.

Durch die vorliegende Erfindung soll nun eine Positioniervorrichtung der eingangs definierten Art dahingehend verbessert werden, daß sie diese Mängel nicht mehr aufweist und insbesondere auch bei unzusammenhängenden Kopiervorlagen eine einwandfrei plane Lage der Kopiervorlagen gewährleistet.

Die diesen Ansprüchen genügende erfindungsgemäße Positioniervorrichtung ist im Anspruch 1 beschrieben. Bevorzugte Ausführungsformen ergeben sich aus den abhängigen Ansprüchen.

Im folgenden wird ein Ausführungsbeispiel einer erfindungsgemäßen Positioniervorrichtung anhand der Zeichnung erläutert. Es zeigt:

Fig. 1 einen Vertikalschnitt in Längsrichtung durch die Vorrichtung nach der Linie I-I der Fig. 3 bei geöffneten Klemmklappen,

Fig. 2 einen analogen Schnitt nach der Linie II-II der Fig. 3 bei geschlossenen Klemmklappen,

Fig. 3 eine Draufsicht nach der Linie III-III der Fig. 1,

Fig. 4 eine vergrößerte Detailansicht aus Fig. 2 und

Fig. 5 eine Detailansicht nach der Linie V-V in Fig. 4.

In der Zeichnung sind nur die wesentlichsten, für das Verständnis der Erfindung erforderlichen Teile der Positioniervorrichtung dargestellt. Es sind dies im wesentlichen eine alles tragende Vorlagenbühne 1, deren obere ebene Oberfläche die Vorlagenebene 11 definiert bzw. mit dieser zusammenfällt, zwei Klemmklappenpaare 3 und 4 zum Führen und Festhalten der Kopiervorlagen 5, zwei seitliche Niederhalteleisten 6 und 7 sowie diverse, weiter unten noch näher bezeichnete Antriebsmittel zur Betätigung der Klappenpaare und der Niederhalteleisten.

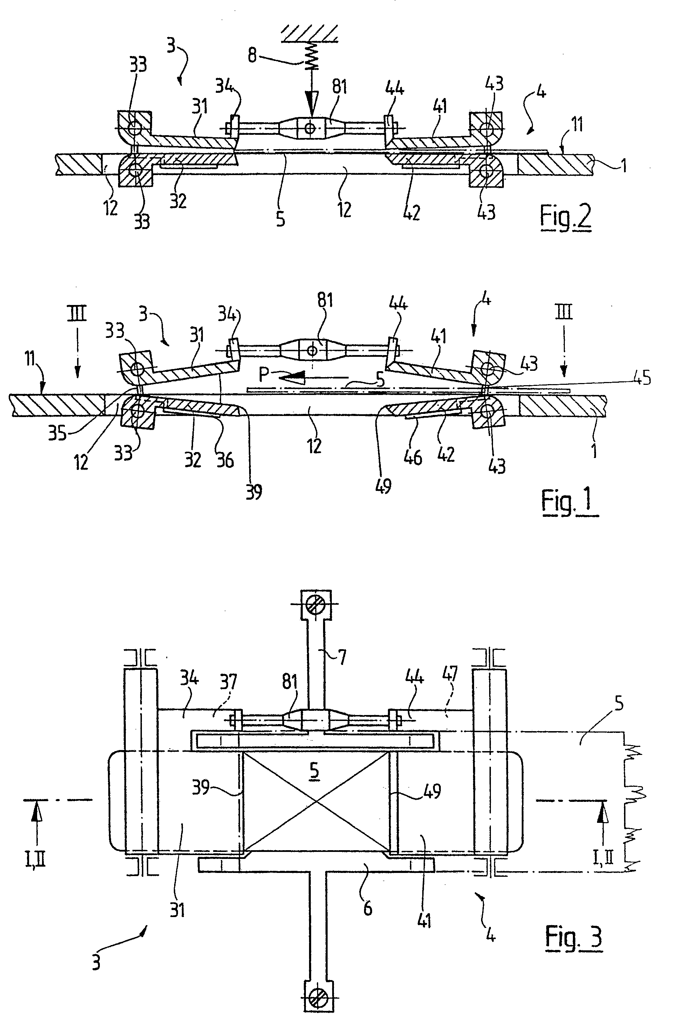

Die beiden Klemmklappenpaare 3 und 4 sind im Bereich eines in der Vorlagenbühne 1 ausgesparten Belichtungsfensters 12 angeordnet. Jedes Paar umfaßt zwei Klappen 31 und 32 bzw. 41 und 42, von denen sich jeweils die eine oberhalb der Vorlagenebene 11 und die andere unterhalb derselben befindet. Die beiden Klappen jedes Paars sind um vertikal übereinander zu je einer Seite der Vorlagenebene 11 befindliche, zur Vorlagenebene parallele und sich zur Transportrichtung (Pfeil P) der Kopiervorlagen 5 senkrecht erstreckende Achsen 33 bzw. 43 schwenkbar derart gelagert, daß sie sich im wesentlichen symmetrisch zur Vorlagenebene 11 schnabelartig öffnen und schließen lassen, wie dies in den Fig. 1 und 2 dargestellt ist.

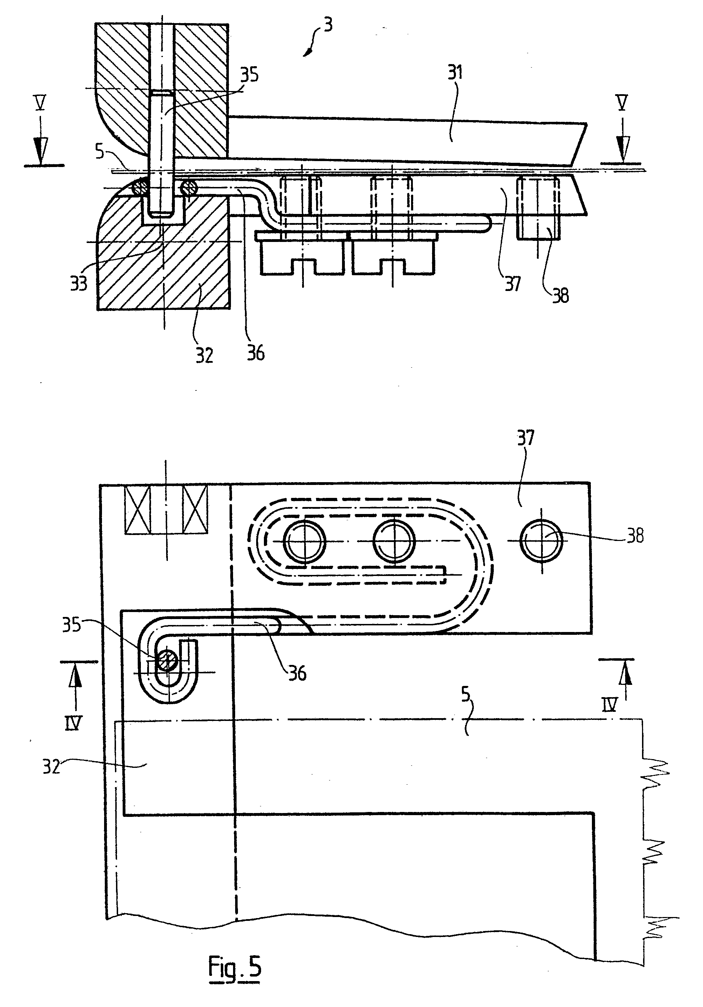

Der Antrieb der Klappen 31, 32, 41 und 42 erfolgt durch einen Elektromagneten 8, der auf eine die beiden oberen Klappen 31 und 41 über seitliche Mitnehmerlappen 34 bzw. 44 koppelnde Verbindungsstange 81 wirkt. Zur kinematischen Kopplung der Klappen innerhalb der beiden Klappenpaare 3 und 4 sind die oberen Klappen 31 und 41 mit je einem Stift 35 bzw. 45 versehen, welcher in einen federnden Bügel 36 bzw. 46 eingreift, der an einem seitlichen Mitnehmerlappen 37 bzw. 47 der unteren Klappen 32 und 42 befestigt ist (Fig. 4 und 5). Zur Bewegungsbegrenzung sind die unteren Klappen 32 und 42 an ihren Mitnehmerlappen 37 bzw. 47 ferner noch mit mit der Vorlagenbühne 1 zusammenwirkenden Justierschrauben 38 versehen.

Die Niederhalteleisten 6 und 7 dienen zum seitlichen Festhalten der Kopiervorlagen 5 auf der Oberfläche 11 der Vorlagenbühne 1. Sie liegen federnd auf der Vorlagenbühne auf und sind mit Einlauf- und Auslaufschrägen ausgestattet.

Die Funktionsweise der beschriebenen Positioniervorrichtung ist wie folgt:

Die Kopiervorlagen 5 werden bei offenen Klemmklappenpaaren 3 und 4 (Fig. 1) in Richtung des Pfeils P eingeführt. Wenn sich das zu kopierende Bildfeld in der richtigen Kopierstellung befindet, werden die Klappenpaare elektromagnetisch geschlossen (Fig. 2), wobei dann die vorderen, quer zur Transportbahn der Kopiervorlagen verlaufenden Kanten 39 bzw. 49 der Klappen 31, 32 und 41, 42 die Kopiervorlage zwischen sich einklemmen und festhalten. Die seitliche Halterung erfolgt, wie schon gesagt, durch die Niederhalteleisten 6 und 7. Gleichzeitig definieren die Klappenpaare 3 und 4 mit ihren Vorderkanten 39 bzw. 40 und die Niederhalteleisten 6 und 7 das Bildformat. Nach erfolgtem Kopiervorgang werden dann die Klemmklappenpaare 3 und 4 wieder geöffnet und das nächste Bildfeld wird in Kopierposition gebracht.

Beim Klappenpaar 3 sind die Vorderkanten 39 vorzugsweise überhängend abgeschrägt, wodurch gewährleistet ist, daß sich die Klappen auch bei allenfalls zu kurz geschnittenen Kopiervorlagen einwandfrei öffnen lassen.

Gegenüber den herkömmlichen Positioniervorrichtungen hat die erfindungsgemäße Vorrichtung den Vorteil, daß die Vorlage jeweils sowohl an der Hinter- als auch an der Vorderkante
festgehalten und dadurch eine absolut plane
Lage der Vorlage erzielt wird. Insbesondere ist
die erfindungsgemäße Vorrichtung daher für
solche Kopiervorlagen geeignet, bei denen Einzelbilder oder kürzere Filmstreifen im Abstand an
einem Trägerband befestigt sind.

**Patentansprüche**

1. Vorrichtung zum Positionieren einer Kopiervorlage in der Vorlagenebene einer Kopiereinrichtung, mit einer ein Belichtungsfenster (12)
aufweisenden Vorlagenbühne (1) und mit elektrisch betätigbaren Anpreßmitteln (3, 4) zum
Festhalten der Vorlage (5) in der Vorlagenebene
(11), dadurch gekennzeichnet, daß die Anpreßmittel zwei in Transportrichtung (P) der Kopiervorlage (5) im Abstand hintereinander angeordnete Klemmklappenpaare (3, 4) mit je einer
oberen (31, 41) und einer unteren (32, 42) Klappe
aufweisen, wobei sich die oberen Klappen (31,
41) oberhalb der Vorlagenebene (11) und die unteren Klappen (32, 42) unterhalb derselben befinden und die Klappen um zur Vorlagenebene (11)
parallele und sich im wesentlichen senkrecht zur
Transportrichtung (P) der Kopiervorlage (5) erstreckende Achsen (33, 43) schwenkbar angeordnet sind, so daß sich die beiden Klappen
der Paare jeweils schnabelartig öffnen und
schließen lassen.

2. Vorrichtung nach Anspruch 1, dadurch gekennzeichnet, daß die Klappenpaare (3, 4) die
Kopiervorlage (5) in geschlossenem Zustand jeweils zwischen zwei an der Klappen (31, 32, 41,
42) ausgebildeten, geraden, senkrecht zur Transportrichtung (P) der Kopiervorlage verlaufenden
Klemmkanten (39, 49) festhalten.

3. Vorrichtung nach Anspruch 1 oder 2, dadurch gekennzeichnet, daß die Anpreßmittel ferner Niederhalteleisten (6, 7) umfassen, welche
die seitlichen, zur Transportrichtung parallelen
Ränder der Kopiervorlage (5) an eine in der Vorlagenebene befindliche Unterlage (1) anpressen,
wobei die Niederhalteleisten federnd in Richtung auf die Unterlage zu belastet sind.

4. Vorrichtung nach einem der vorangehenden
Ansprüche, dadurch gekennzeichnet, daß die
beiden oberen (31, 41) oder die beiden unteren
(32, 42) Klappen der Klappenpaare (3, 4) kinematisch gekoppelt und durch einen gemeinsamen
Antriebsmagnet (8) betätigbar sind.

5. Vorrichtung nach einem der vorangehenden
Ansprüche, dadurch gekennzeichnet, daß die
beiden Klappen (31, 32, 41, 42) der Klappenpaare
(3, 4) jeweils mit Federspiel kinematisch miteinander gekoppelt sind, wobei jeweils eine Klappe
(31, 41) eines Klappenpaares (3, 4) direkt und die
andere Klappe (32, 42) des Paars indirekt über die genannte eine Klappe (31, 41) angetrieben
ist.

6. Vorrichtung nach Anspruch 5, dadurch gekennzeichnet, daß die indirekt angetriebenen
Klappen (32, 42) der Klappenpaare (3, 4) mit der
Vorlagenbühne (1) zusammenwirkende verstellbare Anschlagmittel (38) zur Justierung der Klappen in bezug auf die Vorlagenebene aufweisen.

7. Vorrichtung nach einem der vorangehenden
Ansprüche, dadurch gekennzeichnet, daß die
Klappen (31, 32) des in Transportrichtung (P) vorderen Klappenpaares (3) mit überhängend abgeschrägten Kanten (39) ausgestattet sind.

**Claims**

1. Apparatus for the positioning of a copy master in the copy plane of a copying installation,
with a master stage (1) comprising an exposure
window and with electrically actuable contact
pressure means to hold the master in the copy
plane (11), characterized in that the contact pressure means comprises two pairs of clamping
flaps (3, 4) located spaced apart in succession in
the direction of the direction of transport (p) of
the copy master (5), with an upper (31, 41) and a
lower (32, 42) flap each, wherein the upper flaps
(31, 41) are located above the plane (11) of the
master and the lower flaps (32, 42) under said
plane and with the flaps being arranged pivotingly around axles (33, 43) extending essentially
perpendicularly to the direction of transport (p)
of the copy master (5), so that the two flaps of
the pairs may be opened and closed in the manner of a beak.

2. Apparatus according to claim 1, characterized in that the pairs of flaps (3, 4) hold the copy
master (5) in the closed state between two
clamping edges (39, 49) provided on the flaps
(31, 32, 41, 42) and extending perpendicularly to
the direction of transport (p) of the copy master.

3. Apparatus according to claim 1 or 2, characterized in that the contact pressure means further comprise a plurality of holding strips (6, 7)
with said strips pressuring the lateral edges parallel to the direction of transport of the copy
master (5) against a support (1) located in the
copy plane and with said strips being elastically
loaded in the direction of the support.

4. Apparatus according to one of the preceding claims, characterized in that the two upper
(31, 41) and the lower (32, 42) flaps of the pair (3,
4) of clamping flaps are kinematically coupled
with each other and may be actuated by means
of a common drive magnet (8).

5. Apparatus according to one of the preceding claims, characterized in that the two flaps
(31, 32, 41, 42) of the pair (3, 4) of flaps are coupled with each other kinematically with an elastic clearance, wherein one flap (31, 41) of a pair
of flaps (3, 4) is driven directly and the other flap
(32, 42) of the pair is indirectly driven by means
of said first flap (31, 41).

6. Apparatus according to claim 5, characterized in that the indirectly driven flaps (32, 42) of the pair (3, 4) of flaps are provided with adjustable stop means cooperating with the copy stage (1), for the alignment of the flaps with respect to the copy plane.

7. Apparatus according to one of the preceding claims, characterized in that the flaps (31, 32) of the pair (3) of flaps in front in the direction of transport (p) are equipped with projecting bevelled edges 39.

**Revendications**

1. Dispositif de positionnement d'un original dans le plan original d'une machine photocopieuse, comportant une platine (1) à fenêtre d'exposition (12) et des organes presseurs (3, 4) qui peuvent être actionnés électriquement et sont destinés à maintenir l'original (5) dans son plan (11), dispositif caractérisé en ce que les organes presseurs comportent deux paires (3, 4) de volets de serrage, qui sont disposées l'une derrière l'autre à une certaine distance dans le sens (P) de déplacement de l'original (5) et qui comprennent chacune un volet supérieur (31, 41) et un volet inférieur (32, 42), les volets supérieurs (31, 41) se trouvant au-dessus du plan (11) de l'original et les volets inférieurs (32, 42) étant en-dessous de ce plan et ces volets étant articulés sur des axes (33, 43) parallèles audit plan (11) de l'original et sensiblement perpendiculaires au sens (P) du déplacement de cet original, de façon que les deux volets de chaque paire puissent s'ouvrir et se fermer comme des becs.

2. Dispositif selon la revendication 1, caractérisé en ce que les volets des paires (3, 4) maintiennent, en position fermée, l'original (5) entre deux bords (39, 49) rectilignes et perpendiculaires au sens (P) du déplacement de cet original, formés sur les volets (31, 32, 41, 42) respectifs.

3. Dispositif selon la revendication 1 ou 2, caractérisé en ce que les organes presseurs comprennent encore des réglettes presseuses (6, 7), qui appliquent les bords latéraux de l'original (5), parallèles au sens du déplacement contre un appui (1) qui se trouve dans le plan de cet original, ces réglettes étant sollicitées élastiquement vers cet appui.

4. Dispositif selon l'une des revendications précédentes, caractérisé en ce que les deux volets supérieurs (31, 41) ou les deux volets inférieurs (32, 42) des paires (3, 4) de volets sont accouplés cinématiquement et peuvent être actionnés par un aimant de manoeuvre (8) commun.

5. Dispositif selon l'une des revendications précédentes, caractérisé en ce que les deux volets (31, 32, 41, 42) des paires (3, 4) sont accouplés cinématiquement avec un jeu élastique, l'un (31, 41) des volets d'une paire (3, 4) étant entraîné directement et l'autre volet (32, 42) de la même paire l'étant indirectement par l'intermédiaire du premier volet cité (31, 41).

6. Dispositif selon la revendication 5, caractérisé en ce que les volets (32, 42) entraînés indirectement des paires (3, 4) comportent des organes du butée (38) réglables, coopérant avec la platine (1) et destinés à régler ces volets par rapport au plan de l'original.

7. Dispositif selon l'une des revendications précédentes, caractérisé en ce que les volets (31, 41) de la paire (3) qui se trouve en avant dans le sens (P) du déplacement comportent des bords (39) biseautés en surplomb.

Fig. 2

Fig. 1

Fig. 3

Fig. 5

7